# EUROPEAN PATENT APPLICATION

(11) **EP 4 261 003 A1**
(43) Date of publication of application: **18.10.2023**
(21) Application number: 22168498.8
(22) Date of filing: 14.04.2022
(51) Int. Cl.: B29C 44/34, B29C 44/44, B29C 43/02, B29C 43/52, B29C 35/02, B29C 35/04, B29C 35/08, B29C 35/12, B29K 105/04

(54) **AN EVENLY HEATING METHOD FOR ENHANCING HEATING RESULT**

(71) Applicant: Herlin Up Co., Ltd., Zhuqi Township, Chiayi County 604 (TW)
(72) Inventor: Lin, Po-Chang, Chiayi County (TW)
(74) Representative: Cabinet Chaillot

(57) **Abstract**

Present invention is related to an evenly heating method for enhancing heating result having steps of: introducing an object to be heated (10), which preferred to be a foamed material into a mold (20), compressing the object to be heated (10) by a mechanical force (30) to a preset thickness or status, and heating the object to be heated (10) to obtain a foam product. By applying the mechanical force (30) to the object to be heated (10) during the process, the object to be heated (10) could be compressed into a more compact status in order to be heated more evenly and thoroughly. The present invention provides the foam product in good quality by a simple and low-cost heating method.

## Description

### FIELD OF INVENTION

Present invention is related to a heating method, especially to an evenly heating method for enhancing heating result.

The heating method provided by the present invention is first used in foam material, and the following content will use such foam material as an example to illustrate for better explanation and understanding. However, the present invention is not intended to be limited for such only application. Any other suitable material with similar mechanism can be applied to the heating method provided by the present invention.

### BACKGROUND OF THE INVENTION

Since the invention and development of foamed beads by BASF company from German, it has made a total evolution to the conventional processing or manufacturing of foamed products. Among all industries, this creation has made the most impact to the manufacture of shoe sole, especially to midsole. By the excellent formability in manufacture, great resilience of the foamed beads and trendy beads or particles texture from the appearance, such foaming material enable the shoe sole to have better performance and functional improvement with attractive outlooking, leading the foaming material and related processing industries to enter a new era.

The conventional forming method to shape the foamed beads into molded products or final products is mainly used the method same as the conventional Styrofoam beads. Generally, it comprises the steps of introducing the Styrofoam beads into a closed mold maintaining in high temperature and pressure full of steam; immersing the Styrofoam beads in such closed environment for several hours to have all beads reaching a balance or homogeneous status; releasing the pressure from the steam; following with filling with more steam in high heat and pressure to have all the beads expanded and foamed into molded products.

However, such foaming method using extreme high heat and high pressure will easily make the appearance too smoothly and lost the most important beads or particle textures at the appearance. Also, to soak or immerse the beads completely takes longer time and enormous energy with expansive equipment for proper processing which all these factors makes such products became so expansive and couldn't spread easily within the market. Even though such foamed beads can also be produced as normal filler material or shock absorbing material, the production cost is too high to cover for such lower ended applications.

Hence, it is eager to have a proper method for forming foamed beads that is relatively simple and has a short processing time without requiring additional high-pressure water vapor equipment to overcome or substantially ameliorate at least one or more of the deficiencies of a prior art, or to at least provide an alternative solution to the problems. More importantly, it is also lacking a method to reduce the processing cost of foamed beads for making it able to be introduced into the market of general foamed products, expanding the applications of foamed beads. It is to be understood that, if any prior art information is referred to herein, such reference does not constitute an admission that the information forms part of the common general knowledge in the art.

### SUMMARY OF THE INVENTION

In order to solve the problems or disadvantages of the conventional processing method for such advanced foamed beads material which is time consuming and labor intensive in high cost, the present invention provides a method for improving heating the material more evenly in reasonable cost.

An evenly heating method comprises steps of: introducing an object to be heated into a containing space of a mold; using a mechanical force to reduce the containing space to compress the object to be heated; and applying a heating source to the mold to heat the object in the mold.

In accordance, the object to be heat has flexible, elastic, and compressive properties.

In accordance, the object to be heated comprises semi-foamed materials or foamed materials, or unfoamed materials.

In accordance, the object to be heated is foamed beads.

In accordance, the mold comprises an upper lid and a lower container to define the containing space within, and the upper lid compresses the object to be heated and reduces the containing space.

In accordance, the mechanical force is applied to the mold by electric machinery, pneumatic machinery, or hydraulic machinery.

In accordance, the mechanical force is to use an air compressor compressing air in room temperature into the mold along with introducing the object to be heated into the mold.

In accordance, the heating source includes external heating source, an internal heating source or combination thereof.

In accordance, the external heating source comprises heating the mold by hot water, steam, resistance heating element, direct fire heating, electronic heating element, electromagnetic element, capacitive dielectric element, electric heating tube, hot air or hot oil.

In accordance, the internal heating source comprises radiation heating such as infrared ray heating, radio frequency radiation heating, or microwave heating.

In accordance, the present invention has the following advantages:
1. By using the heating method provided by the present invention, the molded product (or final product) from the foamed beads could have a more obvious texture from the particles which is a significant character of such material. The molded product could be widely applied to all kinds of applications including shoe sole, filler material or shock absorbing material. As the present invention using compression technique to have the object to be heated being heated more evenly, the cost for manufacture could be greatly reduced without longer time processing, special equipment to generate high heat or high pressure. The present invention could effectively reduce the production cost and processing time for such unique material and make a significant contribution to the cost price of the finished product.
2. The heating method provided by the present invention is suitable to produce all kinds of foaming products including micro-foaming or even high foaming requests. The final products could be widely as shoe sole, insole, mat, or mattresses. The heating method of the present invention is not limited to such foamed material. The present invention could also apply to food heating or precooking process with similar idea of compression the heated item during the processing.

### BRIEF DESCRIPTION OF THE DRAWINGS

The steps and the technical means adopted by the present invention to achieve the above and other objects can be best understood by referring to the following detailed description of the preferred embodiments and the accompanying drawings.

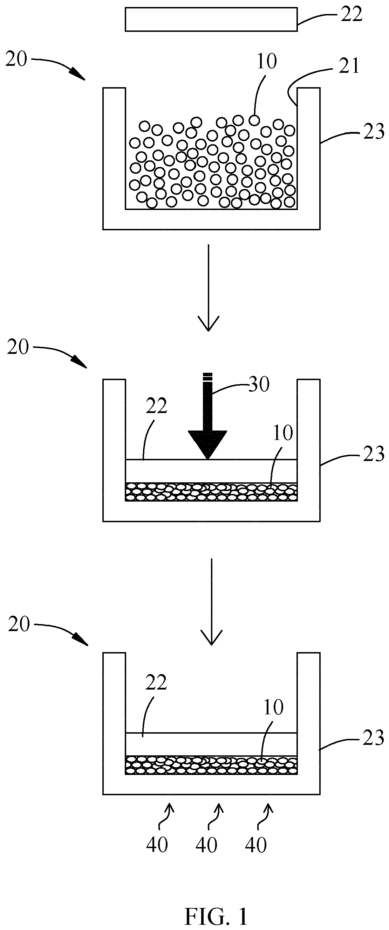

FIG. 1 is an illustrating flowchart of a preferred embodiment in accordance to the present invention.

### DETAILED DESCRIPTION OF THE PREFERRED EMBODIMENTS

Reference will now be made in detail to the presently preferred embodiments of the invention, examples of which are illustrated in the accompanying drawings. Wherever possible, the same reference numbers are used in the drawings and the description to refer to the same or like parts. It is not intended to limit the method by the exemplary embodiments described herein. In the following detailed description, for purposes of explanation, numerous specific details are set forth in order to attain a thorough understanding of the disclosed embodiments. It will be apparent, however, that one or more embodiments may be practiced without these specific details. As used in the description herein and throughout the claims that follow, the meaning of "a", "an", and "the" may include reference to the plural unless the context clearly dictates otherwise. Also, as used in the description herein and throughout the claims that follow, the terms "comprise or comprising", "include or including", "have or having", "contain or containing" and the like are to be understood to be open-ended, i.e., to mean including but not limited to.

With reference to FIG. 1, an illustrating flow chart of a preferred embodiment of an evenly heating method for enhancing heating result provided by the present invention. In this preferred embodiment, foamed beads are firstly used as processing objects, and will be explained in detail below. The method comprises steps as follows.
Step 1: introducing an object 10 to be heated into a containing space 21 of a mold 20;
Step 2: Using a mechanical force 30 to reduce the containing space 21 to compress the object 10 to be heated; and
Step 3: applying a heating source 40 to the mold 20 to heat the object 10 in the mold 20.

The object 10 to be heated by the present invention described in this embodiment preferably has flexible, elastic, and compressive properties. It could be in a form such as semi-foamed materials or foamed materials, or unfoamed materials that may partially have compressive ability. For example, foamed beads are particles that may have been in a semi-foamed condition, and are commonly made of plastic materials including thermoplastic polyurethane elastomer (E-TPU), polylactic acid (PLA), polypropylene (PP), polyethylene (PE), polyamide Amine (PA), Polystyrene (PS), Polyphenylene Ether (PPE), Thermoplastic Elastomer (TPE), Thermoplastic Polyester Elastomer (TPEE), Polyolefin Elastomer (TPO), or Ethylene Vinyl Acetate Copolymer (EVA). The mold 20 in this embodiment preferably includes at least an upper lid 22 and a lower container 23 and the containing space 21 is formed therebetween.

When the object 10 to be heated is foamed beads as a preferred embodiment being introduced into the mold 20 at the first step, the mold 20 may be in a closed or unclosed state. To implement the evenly heating steps, the upper lid 22 compresses onto the object 10 to be heated and making the containing space 21 smaller and applying the mechanical force 30 on the object 10. Meanwhile, each particle of foamed beads in the containing space 21 will be compressed more tightly and having a contact area of each beads increased. When the compressed foamed beads reach to a condition perfect to be processed, the mold 20 will be heated by the heating source 40. As the contact area of each particle has been compress with tightly condition, the heating source 40 could evenly applied to each particle of foamed beads and rapidly spread to all the particles. As such, the present invention could avoid to use high heat and high pressure of steam with longer time immersing or soaking treatment as the conventional Styrofoam beads to obtain a better quality of molded products.

As the mechanical force 30 is continuously applied to the foamed beads in the containing space 21, each of the foamed bead will have more even pressure distribution and compression condition which could avoid any uneven pressure or compression happened and have a better appearance of the molded product.

The aforementioned mechanical force 30 could be applied by any suitable machinery force including an electric, pneumatic or hydraulic machine that directly applies pressure to the upper lid 22 or the lower container 23 and compresses the containing space 21. Another preferred embodiment to applying the mechanical force 30 can also use an air compressor compressing air in room temperature (without using high heat) into the mold 20. Such compressed air will transmit the foamed beads into the mold 20 at the same time, and the effect of compression to the foamed beads can also be achieved during the process.

The aforementioned heating source 40 includes one or a combination of an external heating source or an internal heating source. The external heating source includes heating the mold 20 by hot water, steam, resistance heating element, direct fire heating, electronic heating element, electromagnetic heating, capacitive dielectric heating, electric heating tube, hot air heating, hot oil heating. The internal heating source includes heating the mold 20 using radiation like infrared (IR), radio frequency radiation (RF), and microwave (MW). It is preferred that the mold 20 has its structure or material compatible to the heating source 40. For example, when applying the external heat to the mold 20, it is preferred to use conductive material such as metal on the mold 20 to be able to transmit such heat to the object 10 to be heated within the containing space 21. When applying the internal heat to the mold 20, it is preferred to use the transmitted material such as plastic on the mold 20 to be able to transmit such heat to the object.

In the preferred embodiment of the present invention, it is preferred to use an internal heating source, such as microwave heating, to heat and form the object 10 to be heated. Microwaves providing the energy which could cause intermolecular vibration of the object 10 to be heated and then generate heat from the intermolecular, which can give more even heating performing and have the molded product with good appearance and better forming condition.

By using the heating method provided by the present invention, the molded product (or final product) from the foamed beads could have a more obvious texture from the particles which is a significant character of such material. The molded product could be widely applied to all kinds of applications including shoe sole, filler material or shock absorbing material. As the present invention using compression technique to have the object 10 to be heated being heated more evenly, the cost for manufacture could be greatly reduced without longer time processing, special equipment to generate high heat or high pressure. The present invention could effectively reduce the production cost and processing time for such unique material, and make a significant contribution to the cost price of the finished product.

In order to confirm that the process method provided by the present invention has same or even better mechanical properties of the molded product obtained from the conventional process, the following table 1 is presented. The performance test in table 1 is obtained by the above preferred embodiment of the present invention. The foamed beads contain the material of thermoplastic polyurethane foamed beads (E-TPU) with an average particle weight at a range of 25±10 mg, a thickness of the test piece is 10 mm, and the density is 250 kg/cm³. During the processing, the present invention uses the mechanical force 30 in step 2 to compress the foamed beads so that the compression ratio of the foamed beads is 1 to 3, or more preferably to be 2. The heating source 40 is heated by microwaves with a power of 100W for 180 seconds and is left for cooling before taking out.

**Table 1.**

| Testing Items | Standard | Value |
|---|---|---|
| Tensile strength | DIN EN ISO 1798 | 500 kPa |
| Elongation at break | DIN EN ISO 1798 | 63 % |
| Compression set 22hrs/23°C/50% | DIN EN ISO 1856 | 7% |
| Rebound resilience | DIN 53512 | 54% |
| Heat Conductivity | DIN EN 12667 | 50 mW/m^{∗}K |
| Water absorption (1 day) | DIN 53428 | Less than 2 Vol.-% |

The present invention utilizes the method to compress the foamed beads with the mechanical force 30 applied in step 2 to make the foamed bead with compression ratio better at the range of 1-3, and the heating source 40 uses microwaves with a power of 50-100W. After being heated for 120 to 240 sec, several test pieces formed by the present have the same or better mechanical properties than the test pieces obtained by other conventional molding methods under the same specifications.

The heating method provided by the present invention is suitable to produce all kinds of foaming products including micro-foaming or even high foaming requests. The final products could be widely as shoe sole, insole, mat, or mattresses. The heating method of the present invention is not limited to such foamed material. The present invention could also apply to food heating or precooking process with similar idea of compression the heated item during the processing. The above specification, examples, and data provide a complete description of the present disclosure and use of exemplary embodiments. Although various embodiments of the present disclosure have been described above with a certain degree of particularity, or with reference to one or more individual embodiments, those with ordinary skill in the art could make numerous alterations or modifications to the disclosed embodiments without departing from the spirit or scope of this disclosure.

## Claims

1. An evenly heating method, **characterized in that** the method comprising steps of:
introducing an object to be heated (10) into a containing space (21) of a mold (20);
using a mechanical force (30) to reduce the containing space (21) to compress the object to be heated (10); and
applying a heating source (40) to the mold (20) to heat the object in the mold (20).

2. The method as claimed in claim 1, wherein: the object to be heated (10) has flexible, elastic, and compressive properties.

3. The method as claimed in anyone of claims 1 and 2, wherein: the object to be heated (10) comprises semi-foamed materials or foamed materials, or unfoamed materials.

4. The method as claimed in anyone of claims 1 and 2, wherein: the object to be heated (10) is foamed beads.

5. The method as claimed in claim 1, wherein: the mold (20) comprises an upper lid (22) and a lower container (23) to define the containing space (21) within, and the upper lid (22) compresses the object to be heated (10) and reduces the containing space (21).

6. The method as claimed in anyone of claims 1 to 5, wherein: the mechanical force (30) is applied to the mold (20) by electric machinery, pneumatic machinery, or hydraulic machinery.

7. The method as claimed in anyone of claims 1 to 6, wherein: the mechanical force (30) is to use an air compressor compressing air in room temperature into the mold (20) along with introducing the object to be heated (10) into the mold (20).

8. The method as claimed in claim 1, wherein: the heating source (40) includes external heating source, an internal heating source or combination thereof.

9. The method as claimed in claim 8, wherein: the external heating source comprises heating the mold (20) by hot water, steam, resistance heating element, direct fire heating, electronic heating element, electromagnetic element, capacitive dielectric element, electric heating tube, hot air or hot oil.

10. The method as claimed in claim 8, wherein: the internal heating source comprises radiation heating.

11. The method as claimed in claim 10, wherein: the radiation heating comprises infrared ray heating, radio frequency radiation heating, or microwave heating.
